# EUROPÄISCHE PATENTSCHRIFT

(11) **EP 0 687 848 B1**
(45) Veröffentlichungstag und Bekanntmachung des Hinweises auf die Patenterteilung: **01.10.1997**
(21) Anmeldenummer: 95104017.9
(22) Anmeldetag: 18.03.1995
(51) Int. Cl.: F16L 37/04, F16L 37/08

(54) **Kupplung, insbesondere für Sanitär- und Versorgungseinrichtungen und -leitungen oder dergleichen**
Coupling, in particular for sanitary and supply devices, pipes and the like
Raccord notamment pour dispositifs sanitaires et d'alimentation, tuyaux ou similaire

(30) Priorität: 13.06.1994 DE 4420470
(43) Veröffentlichungstag der Anmeldung: 20.12.1995
(73) Patentinhaber: MELOH-ARMATUREN RUPPEL & MELOH GmbH, D-58642 Iserlohn (DE)
(72) Erfinder: Holomek, Marian, D-58638 Iserlohn (DE); Schröder, Rüdiger, D-58675 Hemer (DE)
(74) Vertreter: Grosse, Rainer, Dipl.-Ing.

(56) Entgegenhaltungen:
- AU-B- 3 314 371
- DE-A- 4 139 124
- FR-A- 408 113
- FR-A- 1 277 984
- US-A- 4 128 264
- US-A- 4 978 150

## Beschreibung

Die Erfindung betrifft eine Kupplung, insbesondere für Sanitär- und Versorgungseinrichtungen und -leitungen oder dergleichen, mit einem Buchsenteil und einem Steckerteil und mit einer Dichtungseinrichtung.

Kupplungen der eingangs genannten Art sollen beim Gegenstand der Erfindung in vielerlei Hinsicht zum Einsatz gelangen. Sie sind beispielsweise geeignet, um Rohre, beispielsweise Wasserrohre, miteinander zu verbinden, oder dienen als Schlauchverbindung. Auch ist es möglich, ein Rohr mit einem Schlauch zu verbinden. Ferner können Schläuche oder Rohrstücke mit Sanitäreinrichtungen, wie beispielsweise Wasserhähne, Einhandmischer und so weiter verbunden werden. Beispielsweise ist es möglich, ein Schwenkhahnrohr mittels der erfindungsgemäßen Kupplung schwenkbeweglich an dem Grundkörper des Schwenkhahnes auf einfache Weise zu befestigen.

Kupplungen der eingangs genannten Art sind grundsätzlich bekannt. Sie weisen entsprechende Gewindeteile und Überwurfmuttern auf, mit deren Hilfe die Teile zusammengefügt und gehalten werden. Die bekannten Kupplungen haben den Nachteil, daß für ihre Montage beziehungsweise Demontage Werkzeug benötigt wird und daß ferner die bekannten Überwurfmuttern optisch störend in Erscheinung treten. Der Erfindung liegt die Aufgabe zugrunde, eine Kupplung der eingangs genannten Art zu schaffen, die die vorstehend genannten Nachteile vermeidet.

Diese Aufgabe wird erfindungsgemäß dadurch gelöst, daß das Buchsenteil ein Federelement aufweist, das das Steckerteil entgegen der Steckrichtung mit einer Kraft beaufschlagt und daß das Steckerteil einen Radialvorsprung aufweist, der einen auslenkbaren Bereich eines sich zwischen Steckerteil und Buchsenteil befindlichen, axial verschieblichen Verriegelungsteils in eine Ausnehmung des Buchsenteils drängt. Aufgrund dieser Ausgestaltung ist eine Festlegung des Steckerteils am Buchsenteil dadurch möglich, daß zunächst das Steckerteil gegen die Kraft des Federelements derart weit in Steckrichtung verlagert wird, daß der auslenkbare Bereich des sich zwischen Steckerteil und Buchsenteil befindlichen Verriegelungsteils in Gegenüberlage zur Ausnehmung gelangt oder -nach einer anderen Variante- in diese Ausnehmung einschnappt. Wird anschließend das Steckerteil freigegeben, so wird es von dem Federelement entgegen der Steckrichtung verlagert, wobei der Radialvorsprung des Steckerelements eine Sicherungsstellung einnimmt, indem er verhindert, daß der auslenkbare Bereich die Ausnehmung verlassen kann. Der Radialvorsprung bewirkt somit, daß der radial nach außen, in die Ausnehmung eingetretene auslenkbare Bereich in dieser Ausnehmung verharrt, wodurch ein Hintergriff zum Radialvorsprung gebildet ist, so daß dieser und damit das Steckerteil nicht wieder aus dem Buchsenteil herausgezogen werden kann. Mithin ist es möglich, die Kupplung -ohne die Verwendung von Werkzeug- zusammenzufügen, wobei keine Überwurfmuttern oder dergleichen zum Einsatz kommen und daher ein ästhetischer optischer Eindruck geschaffen ist.

Nach einer Weiterbildung der Erfindung ist vorgesehen, daß das Buchsenteil eine Aufnahmebohrung für das Steckerteil aufweist, daß sich die Ausnehmung in der Wandung der Aufnahmebohrung befindet und daß die Ausnehmung als (erste) Ringnut ausgebildet ist. Durch die Ausbildung der Ausnehmung als Ringnut ist sichergestellt, daß das Verriegelungsteil in beliebiger Winkelstellung zum Buchsenteil angeordnet sein kann.

Ferner ist es vorteilhaft, wenn das Federelement als elastischer die Dichtungseinrichtung bildender Dichtring, insbesondere O-Ring, ausgebildet ist. Der Dichtring übernimmt somit eine Doppelfunktion, indem er einerseits das Federelement bildet, also ein Element, das eine Kraft entgegen der Einsteckrichtung auf das Steckerteil ausübt, und andererseits die Abdichtung zwischen Buchsenteil und Steckerteil vornimmt.

Nach weiteren Ausführungsbeispielen kann vorgesehen sein, daß zwei oder mehrere Dichtungsringe verwendet werden, wovon jeweils einer die Wirkung des Federelements übernimmt beziehungsweise mit übernimmt und die anderen die Abdichtung vornehmen.

Vorteilhaft ist ferner, wenn der Dichtring in einer (zweiten) Ringnut in der Wandung der Aufnahmebohrung angeordnet ist. Hierdurch erhält der Dichtring in der Aufnahmebohrung des Buchsenteils eine definierte Lage.

Nach einer Weiterbildung der Erfindung ist vorgesehen, daß -in Steckrichtung gesehen- die zweite Ringnut hinter der ersten Ringnut liegt. Auf diese Art und Weise ist sichergestellt, daß beim Einstecken des Steckerteils in das Buchsenteil der Radialvorsprung des Steckerteils auf den sich in der zweiten Ringnut befindlichen Dichtring tritt und daß dann -nach Beendigung der Montage- durch Bewegung des Steckerteils entgegen der Steckrichtung (Kraft des Federelements) die Verriegelungswirkung herbeigeführt wird.

Ferner ist es vorteilhaft, wenn das Steckerteil als kreiszylindrisches Rohr ausgebildet ist. In Zusammenwirkung mit der kreiszylindrischen Aufnahmebohrung des Buchsenteils ist es somit möglich, im sammengesteckten Zustand das Steckerteil in dem Buchsenteil zu verdrehen. Diese Verdreh- beziehungsweise Verschwenkmöglichkeit erlaubt es, spielsweise an dem Buchsenteil, das Bestandteil einer Armatur ist, ein Auslaufrohr schwenkbar zu lagern. Ferner kann an einer Armatur beispielsweise ein Duschschlauch verdrehbar befestigt sein, wodurch Beschädigungen des Schlauches aufgrund dessen Verdrehens verhindert und auch die Handhabung vereinfacht wird.

Ferner ist es vorteilhaft, wenn der Radialvorsprung des Steckerteils von einem Ringvorsprung gebildet ist. Hiermit sind relativ große, sich über den gesamten Umfang erstreckende Kontaktflächen zum Dichtring beziehungsweise zum Überfangen des in die Ausnehmung gedrängten Bereiches des Verriegelungsteils geschaffen.

Die Erstellung des Ringvorsprungs ist besonders einfach, wenn dieser von einer Radialsicke des Steckerteils gebildet ist. Aufgrund der Radialsicke weist das Steckerteil einen radial nach außen weisenden Ringvorsprung auf.

Nach einer bevorzugten Ausführungsform der Erfindung ist vorgesehen, daß die in Steckrichtung weisende Flanke des Radialvorsprungs vom Federelement beaufschlagt wird. Ferner ist es vorteilhaft, wenn die entgegen der Steckrichtung weisende Flanke des Radialvorsprungs den auslenkbaren Bereich des Verriegelungsteils in die Ausnehmung drängt hungsweise in der sich in der Ausnehmung befindlichen Stellung sichert. Insofern werden mittels des Radialvorsprungs, insbesondere mittels des Ringvorsprungs, zwei Funtkionen erfüllt, indem einerseits durch den Ringvorsprung ein Anschlag am Federelement gebildet wird und andererseits vom Ringvorsprung die Verriegelung herbeigeführt wird, indem der Ringvorsprung den auslenkbaren Bereich in einer Verriegelungsstellung in der Ausnehmung hält.

Nach einer Weiterbildung der Erfindung ist das Verriegelungsteil von einer verschieblich auf dem Buchsenteil lagernden Hülse gebildet. Aufgrund der Verschiebbarkeit ist sichergestellt, daß -beim Einstecken des Steckerteils in das Buchsenteil- das Verriegelungsteil in die gewünschte Position gebracht werden kann und daß dann diese Position des Verriegelungsteils beibehalten wird, obwohl aufgrund des Federelements das Steckerteil entgegen der Steckrichtung verlagert wird.

Ferner ist es vorteilhaft, wenn die Hülse einen sich über die gesamte Hülsenlänge erstreckenden Axialschlitz aufweist. Dies führt somit zu einer Schlitzhülse, das heißt, die Axialstabilität der Hülse wird aufgrund des Schlitzes verringert. Soll eine montierte Kupplung wieder entkuppelt werden, so erlaubt der Axialschlitz eine Axialverlagerung eines Teils des Verriegelungsteils derart, daß der zugehörige auslenkbare Bereich dieses Teils des Verriegelungsteils aus der Ausnehmung des Buchsenteils herausgezogen werden kann und daß sich -im Zuge des weiteren axialen Herausziehens des Verriegelungsteils aus seiner sich zwischen Steckerteil und Buchsenteil befindlichen Position- ein "Herausschälen" des auslenkbaren Bereichs aus der Ausnehmung einstellt, so daß insgesamt ein Lösen der Kupplung möglich ist, ohne daß für den Lösevorgang das Steckerteil unter Spannung des Federelements in Steckrichtung in das Buchsenteil hineingedrängt werden muß. Die letztbeschriebene Möglichkeit des Lösens der Kupplung ist jedoch -unabhängig von den vorstehenden Ausführungen- auch möglich, wobei hierzu eine Hülse verwendet werden kann, die keinen Axialschlitz aufweist beziehungsweise kann das beschriebene Vorgehen auch bei einer Hülse mit Axialschlitz durchgeführt werden, wobei die Ausbildung des Axialschlitzes jedoch nicht notwendig ist. In einem solchen Falle wird -wie vorstehend schon beschrieben- für den Lösevorgang zunächst das Steckerteil in Steckrichtung beaufschlagt, wodurch die Radialvorsprünge die auslenkbaren Bereiche des Verriegelungsteils freigeben beziehungsweise nicht mehr in Gegenüberstellung zu dem auslenkbaren Bereich stehen, so daß die Verriegelungsstellung aufgehoben ist und somit das Verriegelungsteil axial herausgezogen werden kann. Ist dies erfolgt beziehungsweise ist das Verriegelungsteil nur ein Stück weit -jedoch nicht ganz- aus seiner Sicherungsposition herausgezogen, so können Steckerteil und Buchsenteil voneinander gelöst werden.

Bevorzugt ist vorgesehen, daß die Hülse an ihrem einen Ende einen sich an eine Axialfläche des Buchsenteils abstützenden Ringbund aufweist. Der Ringbund liegt somit außerhalb des Eingriffbereichs des Steckerteils im Buchsenteil und kann daher -beispielsweise zum Lösen der Kupplung- erfaßt oder mittels eines Schraubenziehers oder dergleichen unterhebelt werden, um das Verriegelungsteil axial herauszuziehen.

Ferner ist vorgesehen, daß der auslenkbare Bereich an dem dem Ringbund gegenüberliegenden anderen Ende der Hülse ausgebildet ist. Bevorzugt ist der auslenkbare Bereich von einer radial verlagerbaren Wand gebildet, die einen Wulst, insbesondere Ringwulst, für die Festlegung in der Ausnehmung des Buchsenteils aufweist. Die radial verlagerbare Wand bildet quasi eine Art Feder beziehungsweise sie ermöglicht eine Radialverlagerung für den erwähnten Wulst, der -in der Verriegelungsposition der Kupplung- in der Ausnehmung des Buchsenteils einliegt.

Schließlich ist es vorteilhaft, wenn die Wand und/oder der Wulst, insbesondere Ringwulst, mittels mindestens einer zum anderen Ende hin offenen Ausnehmung unterteilt ist. Hierdurch werden einzelne Segmente gebildet, wodurch die Radialverlagerbarkeit des auslenkbaren Bereichs erhöht wird.

Ferner ist die Anordnung vorzugsweise derart getroffen, daß der Außendurchmesser der Wand kleiner als der Außendurchmesser eines sich zwischen der Wand und dem Ringbund befindlichen Führungsabschnitts des Verriegelungsteils ausgebildet ist. Aufgrund des geringeren Außendurchmessers der Wand gegenüber dem Führungsabschnitt besteht ein Freiraum zur Wandung der Aufnahmebohrung des Buchsenteils, der die radiale Verlagerbarkeit des auslenkbaren Bereichs ermöglicht. Um das Steckerteil paßgenau im Buchsenteil zu halten, ist der Führungsabschnitt am Verriegelungsteil vorgesehen.

Bevorzugt ist das Verriegelungsteil aus Kunststoff gefertigt. Dies erfolgt vorzugsweise in einstückiger Bauart.

Schließlich ist die axiale Ausdehnung des Radialvorsprungs größer als der freie Abstand zwischen dem unbelasteten Dichtring und dem auslenkbaren Bereich. Dies hat zur Folge, daß in Kuppelstellung stets vom elastischen Dichtring der Radialvorsprung in einer Position gehalten ist, in der er den auslenkbaren Bereich des Verriegelungsteils überfängt und auf diese Art und Weise verhindert, daß er aus der Ausnehmung des Buchsenteils austreten und dadurch die Kupplung lösen kann.

Die Zeichnungen veranschaulichen die Erfindung anhand eines Ausführungsbeispiels und zwar zeigt:
- Figur 1: eine Längsschnittansicht durch eine findungsgemäße Kupplung in Explosionsdarstellung,
- Figur 2: die Kupplung der Figur 1 in einer schenmontagestellung,
- Figur 3: eine Detailansicht der Kupplung gemäß Figur 2 und
- Figur 4: die Kupplung in Kuppelstellung

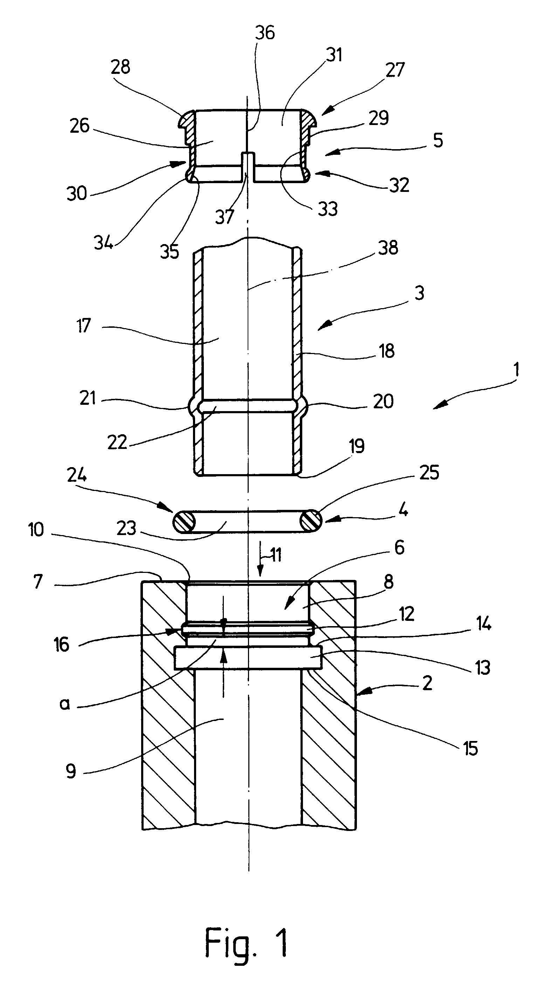

Die Figur 1 zeigt -in Explosionsdarstellung- die Einzelteile einer Kupplung 1. Es handelt sich hierbei um ein Buchsenteil 2, ein Steckerteil 3, ein Federelement 4 und ein Verriegelungsteil 5. Vom Steckerteil 3 ist nur ein Abschnitt dargestellt; dies ist durch die in der Figur 1 erkennbare Bruchlinie angedeutet.

Das Buchsenteil 2 weist eine stufenförmige Aufnahmebohrung 6 auf, die -ausgehend von einer Axialfläche 7 des Buchsenteils 2- von einem durchmessergrößeren Abschnitt 8 und einem demgegenüber messerkleineren Abschnitt 9 gebildet ist. Die Axialfläche 7 geht unter Ausbildung einer Fase 10 in die Aufnahmebohrung 6 über.

In Steckrichtung gesehen (Pfeil 11) befindet sich in der Aufnahmebohrung 6 -und zwar im durchmessergrößeren Abschnitt 8- eine erste Ringnut 12. Dem schließt sich -in einem Abstand a- eine zweite Ringnut 13 an, von der die in Richtung der ersten Ringnut 12 weisende Flanke 14 im durchmessergrößeren Abschnitt 8 und dessen gegenüberliegende Flanke 15 im durchmesserkleineren Abschnitt 9 der Aufnahmebohrung 6 ausgebildet ist. Die erste Ringnut 12 bildet somit eine Ausnehmung 16 in der Aufnahmebohrung 6 des Buchsenteils 2.

Das Buchsenteil 2 ist ebenfalls in der Figur 1 nicht vollständig dargestellt, sondern mit einer Bruchlinie versehen; es kann auf verschiedene Arten realisiert sein. Beispielsweise kann es eine Sanitärarmatur bilden, an der ein Duschschlauch oder ein schwenkbarer (oder auch nicht schwenkbarer) Auslauf (Steckerteil 3) befestigt werden soll. Weitere Varianten, beispielsweise die Verwendung als ein Teil einer Schlauchverbindung und so weiter, liegen ferner ebenfalls im Rahmen der Erfindung.

Das Steckerteil 3 ist als kreiszylindrisches Rohr 17 ausgebildet, das eine konstante Wandstärke seiner Wandung 18 aufweist. Beabstandet vom Ende 19 des Rohres 17 ist ein Radialvorsprung 20 ausgebildet, der als Ringvorsprung 21 gestaltet ist. Vorzugsweise wird er dadurch gebildet, daß das Rohr 17 mit einer umlaufenden Radialsicke 22 versehen wird, das heißt, mittels eines entsprechenden Bearbeitungsverfahrens am Rohr 17 ausgebildet wird.

Das Federelement 4 ist als elastischer Dichtring 23 ausgebildet, der eine Dichtungseinrichtung 24 bildet. Bevorzugt kann als Dichtring 23 ein O-Ring 25 zum Einsatz kommen.

Der O-Ring 25 besteht vorzugsweise aus einem Elastomer oder aus Gummi. Buchsenteil 2 und Steckerteil 3 können beispielsweise aus Metall bestehen. Das Verriegelungsteil 5 ist vorzugsweise aus einem Elastomer, beispielsweise aus Kunststoff, gefertigt.

Das Verriegelungsteil 5 ist als Hülse 26 ausgebildet, die an ihrem einen Ende 27 einen Ringbund 28 aufweist, der axial einen sich daran anschließenden Führungsabschnitt 29 überragt, an den sich ein radial auslenkbarer Bereich 30 anschließt. Die Hülse 26 wird von einer Durchgangsbohrung 31 durchsetzt, dessen Innendurchmesser dem Außendurchmesser des Rohres 17 entspricht. Der Außendurchmesser des Rohres 17 entspricht ferner dem Innendurchmesser des durchmesserkleineren Bereichs 9 der Aufnahmebohrung 6.

Der auslenkbare Bereich 30 des Verriegelungsteils 5 ist somit an dem dem Ringbund 28 gegenüberliegenden Ende 32 der Hülse 26 ausgebildet. Er wird von einer radial nach außen verlagerbaren Wand 33 und einem Wulst 34 gebildet, der vorzugsweise als Ringwulst ausgebildet ist. Wie in der Figur 1 ersichtlich, verlaufen Wand 33 und Wulst 34 zueinander abgewinkelt, derart, daß der Wulst 34 die außere Mantelfläche der Wand 33 radial nach außen überragt. Ferner ist die Innenmantelfläche der Durchgangsbohrung 31 im Bereich des Wulstes 34 nicht fluchtend zu dem übrigen Bereich der Innenmantelfläche der Durchgangsbohrung 31 ausgebildet, sondern ebenfalls unter einem Winkel nach außen hin versetzt, wodurch eine Art Auflaufschräge 35 ausgebildet wird. Der Außendurchmesser der Wand 33 ist kleiner als der Außendurchmesser des Führungsabschnitts 29 ausgebildet. Der Außendurchmesser des äußersten Punktes des Wulstes 34 liegt -im unmontierten Zustand der Figur 1- etwa auf Höhe des Außendurchmessers des Führungsabschnittes 29.

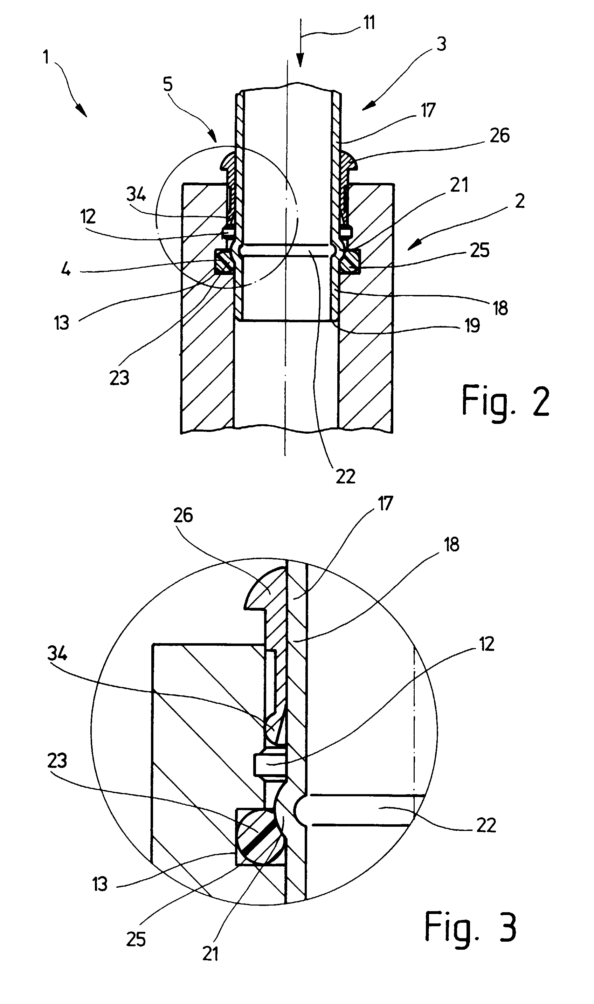

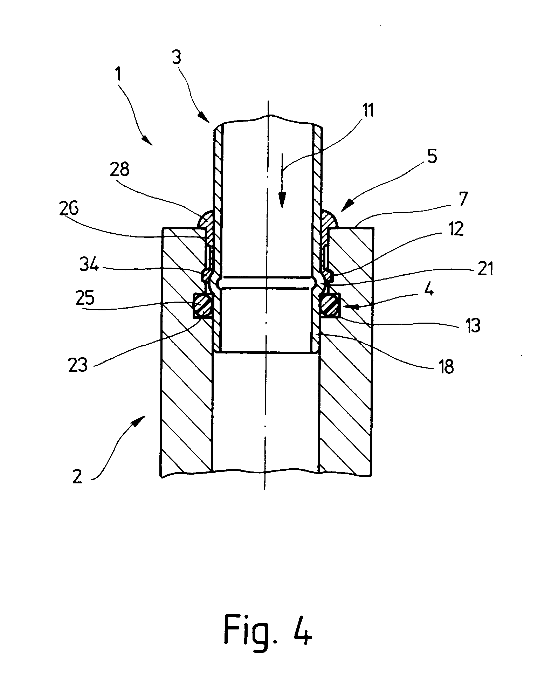

Soll eine Montage der in der Figur 1 dargestellten Teile erfolgen, soll also die Kupplung 1 zusammengefügt werden, so wird zunächst das Steckerteil 3 in die Aufnahmebohrung 6 des Buchsenteils 2 eingeschoben. Verwiesen wird hierzu auf die Figuren 2 und 3. Voraussetzung hierfür ist, daß -wie aus den Figuren 2 und 3 ersichtlich- sich der Dichtring 23 in der zweiten Ringnut 13 befindet und daß die Hülse 26 derart auf das Rohr 17 aufgeschoben ist, daß es sich auf der dem Ende 19 abgewandten Seite von der Radialsicke 22 befindet, wobei der Wulst 34 in Richtung auf die Radialsicke 22 weist. Im Zuge der Einschubbewegung (Steckrichtung gemäß Pfeil 11) tritt der aufgrund der Radialsicke 22 ausgebildete Ringvorsprung 21 gegen den O-Ring 25, so daß dieser aufgrund seiner elastischen Eigenschaft um ein gewisses Maß verformt wird. Diese -gegenüber der Kupplungs-Ruhestellung- tiefere Einsteckposition führt dazu, daß der Ringvorsprung 21 nicht in Gegenüberlage zur ersten Ringnut 12 liegt, sondern -in Steckrichtung betrachtet- darüber hinaus verlagert ist. Diese Einsteckposition des Steckerteils 3 in das Buchsenteil 2 erlaubt es, die Hülse 26 -die sich zwischen Buchsenteil 2 und Steckerteil 3 befindet- derart in Richtung des Pfeils 11 schieben, daß der Wulst 34 des auslenkbaren Bereichs 30 in Gegenüberlage zur ersten Ringnut 12 kommt beziehungsweise sogar teilweise bereits in die Ringnut 12 radial eintritt. In dieser -in der Figur 4 gezeigten- Position liegt der Ringbund 28 auf der Axialfläche 7 des Buchsenteils 2 auf. Wird nun das Steckerteil 3 entlastet, das heißt, kann der als Federelement 4 wirkende Dichtring 23 das Steckerteil 3 entgegen der Richtung des Pfeiles 11 aufgrund seiner Elastizität ein Stückchen zurückschieben, so tritt der Ringvorsprung 21 gemäß Figur 3 in Sicherungsposition zum auslenkbaren Bereich 30, das heißt, der als Ringwulst ausgebildete Wulst 34 ist in die erste Ringnut 12 hineingedrängt und verriegelt insofern die Stellung des Steckerteils 3 im Buchsenteil 2.

Um eine Demontage, also eine Entkupplung, der Kupplung 1 herbeizuführen, ist es -gemäß Figur 4- lediglich nötig, das Steckerteil 3 derart weit aufgrund der Nachgiebigkeit des Dichtring 23 in Richtung des Pfeiles 11 einzuschieben, daß der Wulst 34 des Verriegelungsteils 5 freigegeben wird. Es ist dann möglich, mittels eines zwischen Axialfläche 7 und Ringbund 28 geschobenen Fingernagels oder dergleichen die Hülse 26 entgegen der Richtung des Pfeiles 11 herauszuziehen, so daß anschließend dann auch das Steckerteil 3 aus der Aufnahmebohrung 6 des Buchsenteils 2 herausgezogen werden kann.

Nach einem weiteren Ausführungsbeispiel ist -wie auch in Figur 1 gezeigt- vorgesehen, daß die Hülse 26 einen sich über die gesamte Hülsenlänge erstreckenden Axialschlitz 36 aufweist. Dieser ist vorzugsweise im Bereich randoffener Ausnehmungen 37 ausgebildet, die am Ende 32 der Hülse 26 gebildet sind. In der Figur 1 ist lediglich eine Ausnehmung 37 dargestellt; vorzugsweise sind mehrere derartige Ausnehmungen 37, um den Umfang der Hülse 26 verteilt, vorgesehen.

Der Axialschlitz 36 führt zu dem Vorteil, daß bei einer Demontage der Kupplung 1 es nicht notwendig ist, daß das Steckerteil 3 zunächst weiter in das Buchsenteil 2 hineingeschoben werden muß, da -aufgrund der durch den Axialschlitz 36 gebildeten geringeren Axialstabilität der Hülse 26- auch ein Herausziehen der Hülse 26 möglich ist, wenn der Ringbund 28 nahe des Axialschlitzes 36 erfaßt und entgegen der Richtung des Pfeiles 11 herausgezogen wird. Hierdurch schält sich der Wulst 34 aus der Ausnehmung 16 heraus. Im Normalbetrieb legt jedoch auch eine geschlitzte Hülse 26 das Steckerteil 3 wackelfrei und strammsitzend sowie sicher am Buchsenteil 2 fest.

Da es sich bei den aus den Figuren genannten Teilen um rotationssymmetrische Teile gemäß der Achse 38 der Figur 1 handelt, ist verständlich, daß alle Teile relativ zueinander um die Achse 38 gedreht werden können, das heißt, eine Axialsicherung der Teile ist gegeben, eine Verdrehbarkeit jedoch möglich.

Nach einem anderen, nicht dargestellten Ausführungsbeispiel ist es auch möglich, mehrere O-Ringe 25 einzusetzen, wobei einer der O-Ringe 25 das zuvor erwähnte Federelement 4 bildet und die anderen -beispielsweise bei einer Ausführung, die einem erhöhten Innendruck unterliegt- eine Dichtungsfunktion übernehmen.

## Patentansprüche

1. Kupplung, insbesondere für Sanitär- und gungseinrichtungen und -leitungen oder dergleichen, mit einem Buchsenteil und einem Steckerteil und mit einer Dichtungseinrichtung, **dadurch gekennzeichnet**, daß das Buchsenteil (2) ein Federelement (4) aufweist, das das Steckerteil (3) entgegen der Steckrichtung (Pfeil 11) mit einer Kraft beaufschlagt und daß das Steckerteil (3) einen Radialvorsprung (20) aufweist, der einen auslenkbaren Bereich (30) eines sich zwischen Steckerteil (3) und Buchsenteil (2) befindlichen, axial verschieblichen Verriegelungsteils (5) in eine Ausnehmung (16) des Buchsenteils (2) drängt.

2. Kupplung nach Anspruch 1, **dadurch gekennzeichnet**, daß das Buchsenteil (2) eine Aufnahmebohrung (6) für das Steckerteil (3) aufweist, daß sich die Ausnehmung (16) in der Wandung der Aufnahmebohrung (6) befindet und daß die Ausnehmung (16) als (erste) Ringnut (12) ausgebildet ist.

3. Kupplung nach einem der vorhergehenden Ansprüche, **dadurch gekennzeichnet**, daß das Federelement (4) als elastischer, die Dichtungseinrichtung (24) bildender Dichtring (23), insbesondere O-Ring (25), ausgebildet ist.

4. Kupplung nach einem der vorhergehenden Ansprüche, **dadurch gekennzeichnet**, daß der Dichtring (23) in einer (zweiten) Ringnut (13) in der Wandung der Aufnahmebohrung (6) angeordnet ist.

5. Kupplung nach einem der vorhergehenden Ansprüche, **dadurch gekennzeichnet**, daß -in Steckrichtung (Pfeil 11) gesehen- die zweite Ringnut (13) hinter der ersten Ringnut (12) liegt.

6. Kupplung nach einem der vorhergehenden Ansprüche, **dadurch gekennzeichnet**, daß das Steckerteil (3) als kreiszylindrisches Rohr (17) ausgebildet ist.

7. Kupplung nach einem der vorhergehenden Ansprüche, **dadurch gekennzeichnet**, daß der Radialvorsprung (20) des Steckerteils (3) von einem Ringvorsprung (21) gebildet ist.

8. Kupplung nach einem der vorhergehenden Ansprüche, **dadurch gekennzeichnet**, daß der Ringvorsprung(21) von einer Radialsicke (22) des Steckerteils(3) gebildet ist.

9. Kupplung nach einem der vorhergehenden Ansprüche, **dadurch gekennzeichnet**, daß die in Steckrichtung (Pfeil 11) weisende Flanke des Radialvorsprungs (20) vom Federelement (4) beaufschlagt wird.

10. Kupplung nach einem der vorhergehenden Ansprüche, **dadurch gekennzeichnet**, daß die entgegen der Steckrichtung (Pfeil 11) weisende Flanke des Radialvorsprungs (20) den auslenkbaren Bereich (30) des Verriegelungsteils (5) in die Ausnehmung (16) drängt.

11. Kupplung nach einem der vorhergehenden Ansprüche, **dadurch gekennzeichnet**, daß das Verriegelungsteil (5) von einer verschieblich auf dem Buchsenteil (2) lagernden Hülse (26) gebildet ist.

12. Kupplung nach einem der vorhergehenden Ansprüche, **dadurch gekennzeichnet**, daß die Hülse (26) einen sich über die gesamte Hülsenlänge erstreckenden Axialschlitz (36) aufweist.

13. Kupplung nach einem der vorhergehenden Ansprüche, **dadurch gekennzeichnet**, daß die Hülse (26) an ihrem einen Ende (27) einen sich an einer Axialfläche (7) des Buchsenteils (2) abstützenden Ringbund (28) aufweist.

14. Kupplung nach einem der vorhergehenden Ansprüche, **dadurch gekennzeichnet**, daß der auslenkbare Bereich (30) an dem dem Ringbund (28) gegenüberliegenden anderen Ende (32) der Hülse (26) ausgebildet ist.

15. Kupplung nach einem der vorhergehenden Ansprüche, **dadurch gekennzeichnet**, daß der auslenkbare Bereich (30) von einer radial verlagerbaren Wand (33) gebildet ist, die einen Wulst (34), insbesondere Ringwulst, für die Festlegung in der Ausnehmung (16) des Buchsenteils (2) aufweist.

16. Kupplung nach einem der vorhergehenden Ansprüche, **dadurch gekennzeichnet**, daß die Wand (33) und/oder der Wulst (34), insbesondere Ringwulst, mittels mindestens einer zum anderen Ende (32) hin randoffene Ausnehmung (37) unterteilt ist.

17. Kupplung nach einem der vorhergehenden Ansprüche, **dadurch gekennzeichnet**, daß der Außendurchmesser der Wand (33) kleiner als der Außendurchmesser eines sich zwischen der Wand (33) und dem Ringbund (28) befindlichen Führungsabschnitts (29) des Verriegelungsteils (5) ausgebildet ist.

18. Kupplung nach einem der vorhergehenden Ansprüche, **dadurch gekennzeichnet**, daß das Verriegelungsteil (5) aus Kunststoff hergestellt ist.

19. Kupplung nach einem der vorhergehenden Ansprüche, **dadurch gekennzeichnet**, daß die axiale Länge des Radialvorsprungs (20) größer als der freie Abstand zwischen dem unbelasteten Dichtring (23) und dem auslenkbaren Bereich (30) ist.

## Claims

1. A coupling, in particular for sanitary and supply devices and pipes or the like, comprising a socket part and a plug part and comprising a sealing device, characterised in that the socket part (2) has a resilient element (4) applying a force to the plug part (3) contrary to the plugging direction (arrow 11), and in that the plug part (3) has a radial projection (20) which pushes a deflectable region (30) of an axially displaceable locking member (5) into a recess (16) of the socket part (2), the locking member (5) being arranged between the plug part (3) and the socket part (2).

2. A coupling according to claim 1, characterised in that the socket part (2) has a receiving bore (6) for the plug part (3), in that the recess (16) is provided in the wall of the receiving bore (6) and in that the recess (16) is formed as a (first) annular groove (12).

3. A coupling according to either one of the preceding claims,
characterised in that the resilient element (4) is formed as a resilient sealing ring (23), in particular an O-ring (25), forming the sealing device (24).

4. A coupling according to any one of the preceding claims,
characterised in that the sealing ring (23) is arranged in a (second) annular groove (13) in the wall of the receiving bore (6).

5. A coupling according to any one of the preceding claims,
characterised in that the second annular groove (13) is arranged downstream of the first annular groove (12) when viewed in the plugging direction (arrow 11).

6. A coupling according to any one of the preceding claims,
characterised in that the plug part (3) is formed as a circularcylindrical tube (17).

7. A coupling according to any one of the preceding claims,
characterised in that the radial projection (20) of the plug part (3) is formed by an annular projection (21).

8. A coupling according to any one of the preceding claims,
characterised in that the annular projection (21) is formed by a radial bead (22) of the plug part (3).

9. A coupling according to any one of the preceding claims,
characterised in that the flank of the radial projection (20) facing in the plugging direction (arrow 11) is acted upon by the resilient element (4).

10. A coupling according to any one of the preceding claims,
characterised in that the flank of the radial projection (20) facing away from the plugging direction (arrow 11) pushes the deflectable region (30) of the locking member (5) into the recess (16).

11. A coupling according to any one of the preceding claims,
characterised in that the locking member (5) is formed by a sleeve (26) displaceably mounted on the socket part (2).

12. A coupling according to any one of the preceding claims,
characterised in that the sleeve (26) has an axial slot (36) extending over the entire sleeve length.

13. A coupling according to any one of the preceding claims,
characterised in that one end (27) of the sleeve (26) has an annular collar (28) supported against an axial surface (7) of the socket part (2).

14. A coupling according to any one of the preceding claims,
characterised in that the deflectable region (30) is formed at the other end (32) of the sleeve (26) opposite the annular collar (28).

15. A coupling according to any one of the preceding claims,
characterised in that the deflectable region (30) is formed by a radially displaceable wall (33) having a bead (34), in particular an annular bead, for securing in the recess (16) of the socket part (2).

16. A coupling according to any one of the preceding claims,
characterised in that the wall (33) and/or the bead (34), in particular annular bead, is divided by means of at least one recess (37) open towards the other end (32).

17. A coupling according to any one of the preceding claims,
characterised in that the outer diameter of the wall (33) is smaller than the outer diameter of a guiding portion (29) of the locking member (5), the guiding portion (29) being arranged between the wall (33) and the annular collar (28).

18. A coupling according to any one of the preceding claims,
characterised in that the locking member (5) is manufactured from plastics.

19. A coupling according to any one of the preceding claims,
characterised in that the axial length of the radial projection (20) is greater than the clear distance between the unloaded sealing ring (23) and the deflectable region (30).

## Revendications

1. Raccord notamment pour des conduites et installations sanitaires et d'alimentation ou analogues, comportant une pièce formant manchon et une pièce d'enfichage ainsi qu'un dispositif d'étanchéité,
caractérisé en ce que
- la pièce formant manchon (2) comporte un élément élastique (4) qui sollicite la pièce d'enfichage (3) dans la direction opposée à la direction d'enfichage (flèche 11) avec une force et,
- la pièce d'enfichage (3) comporte une saillie radiale (20) qui repousse une zone extensible (30) d'une pièce de verrouillage (5) se trouvant entre la pièce d'enfichage (3) et la pièce formant manchon (2), coulissantes axialement, le refoulement se faisant dans une cavité (16) de la pièce formant manchon (2).

2. Raccord selon la revendication 1,
caractérisé en ce que la pièce formant manchon (2) comporte un perçage de réception (6) pour la pièce d'enfichage (3),
- la cavité (16) est prévue dans la paroi du perçage de réception (6) et,
- la cavité (16) est en forme de rainure annulaire (12) (première rainure).

3. Raccord selon l'une des revendications précédentes,
caractérisé en ce que
l'élément élastique (4) est un joint annulaire (23) élastique formant le dispositif d'étanchéité (24) notamment un joint torique (25).

4. Raccord selon l'une des revendications précédentes,
caractérisé en ce que
le joint d'étanchéité (23) est logé dans une rainure annulaire (13) (seconde rainure annulaire) de la paroi du perçage de réception (6).

5. Raccord selon l'une des revendications précédentes,
caractérisé en ce que
la seconde rainure annulaire (13) vue dans le sens de l'enfichage (flèche 11), se trouve derrière la première rainure annulaire (12).

6. Raccord selon l'une des revendications précédentes,
caractérisé en ce que
la pièce d'enfichage (3) est en forme de tube cylindrique circulaire (17).

7. Raccord selon l'une des revendications précédentes,
caractérisé en ce que
la saillie radiale (20) de la pièce d'enfichage (3) est formée par une saillie annulaire (21).

8. Raccord selon l'une des revendications précédentes,
caractérisé en ce que
la saillie annulaire (21) est formée par une déformation radiale (22) de la pièce d'enfichage (3).

9. Raccord selon l'une des revendications précédentes,
caractérisé en ce que
le flanc de la saillie radiale (20) tourné dans la direction d'enfichage (flèche 11), est sollicité par l'élément élastique (4).

10. Raccord selon l'une des revendications précédentes,
caractérisé en ce que
le flanc de la saillie radiale (20) tourné dans la direction opposée à la direction d'enfichage (flèche 11), refoule la zone extensible (30) de la pièce de verrouillage (5) dans la cavité (16).

11. Raccord selon l'une des revendications précédentes,
caractérisé en ce que
la pièce de verrouillage (5) est formée par une douille (26) coulissant sur la partie en forme de manchon (2).

12. Raccord selon l'une des revendications précédentes,
caractérisé en ce que
la douille (26) comporte une fente axiale (36) s'étendant sur toute la longueur de la douille.

13. Raccord selon l'une des revendications précédentes,
caractérisé en ce que
la douille (26) comporte à une extrémité (27), une collerette annulaire (28) qui s'appuie contre une surface axiale (7) de la pièce formant manchon (2).

14. Raccord selon l'une des revendications précédentes,
caractérisé en ce que
la zone extensible (30) est réalisée à l'autre extrémité (32) de la douille (26) à l'opposé de la collerette annulaire (28).

15. Raccord selon l'une des revendications précédentes,
caractérisé en ce que
la zone extensible (30) est formée par une paroi (33) mobile radialement qui comporte un bourrelet (34), notamment un bourrelet annulaire pour la fixation dans la cavité (16) de la pièce formant manchon (2).

16. Raccord selon l'une des revendications précédentes,
caractérisé en ce que
la paroi (33) et/ou le bourrelet (34) notamment le bourrelet annulaire est subdivisé par au moins une cavité (37) ouverte à l'autre extrémité (32).

17. Raccord selon l'une des revendications précédentes,
caractérisé en ce que
le diamètre extérieur de la paroi (33) est inférieur au diamètre extérieur d'un segment de guidage (29) de la pièce de verrouillage (5) entre la paroi (33) et la collerette annulaire (28).

18. Raccord selon l'une des revendications précédentes,
caractérisé en ce que
la pièce de verrouillage (5) est en matière plastique.

19. Raccord selon l'une des revendications précédentes,
caractérisé en ce que
la longueur axiale de la saillie radiale (20) est supérieure à la distance libre entre le joint d'étanchéité (23) non chargé et la zone extensible (30).
